# EUROPÄISCHE PATENTSCHRIFT

(11) **EP 0 605 783 B1**
(45) Veröffentlichungstag und Bekanntmachung des Hinweises auf die Patenterteilung: **27.01.1999**
(21) Anmeldenummer: 93118768.6
(22) Anmeldetag: 22.11.1993
(51) Int. Cl.: C12C 13/08

(54) **Kocher für einen Würzekessel**
Heater for a wort kettel
Chaudière pour un bouilleur de moût

(30) Priorität: 23.12.1992 DE 9217644 U
(43) Veröffentlichungstag der Anmeldung: 13.07.1994
(73) Patentinhaber: ANTON STEINECKER ENTWICKLUNGS GmbH & Co., D-85356 Freising/Attaching (DE)
(72) Erfinder: Stippler, Kurt DR., D-85417 Marzling (DE); Wasmuht, Klaus, D-91792 Ellingen (DE)
(74) Vertreter: Grünecker, Kinkeldey, Stockmair & Schwanhäusser Anwaltssozietät

(56) Entgegenhaltungen:
- DE-A- 3 924 064
- DE-C- 435 083
- DE-C- 573 503
- GB-A- 780 547
- GB-A- 982 923

## Beschreibung

Die Erfindung bezieht sich auf einen Kocher für einen Würzekessel mit einem ersten Würzeleitschirm am Austritt der Würze.

Bei einem derartigen bekannten Kocher wird die ausströmende heiße Würze an dem Würzeleitschirm umgelenkt und zu einem schirmartigen Fächer verteilt. Auf diese Weise wird eine Ausdampffläche für die Würze erzielt, damit unerwünschte Aromastoffe, Hopfenöle und dergleichen ausdampfen können. Hierbei ist nachteilig, daß nicht alle unerwünschten Stoffe ausdampfen.

Aus der DE-C-573503 ist ein Kocher mit einem Aufsatz bekannt, der mehrere ringförmige Leitbleche aufweist und damit eine Aufteilung des Flüssigkeitsstromes erreicht. Da jedoch das oberste Leitblech ebenfalls eine zentrale Durchtrittsöffnung aufweist wird der zentral austretende Flüssigkeitsstrom nicht umgelenkt.

Die Aufgabe der Erfindung besteht somit darin, die Ausdampffläche zu vergrößern, damit noch mehr unerwünschte Aromastoffe verdampfen können.

Zur Lösung dieser Aufgabe wird erfindungsgemäß vorgeschlagen, daß ein zweiter Würzeleitschirm oberhalb des ersten Würzeleitschirms angeordnet ist und der erste Würzeleitschirm eine Durchtrittsöffnung für die Würze aufweist. Die aus dem Kocher ausströmende heiße Würze wird sowohl an dem ersten als auch an dem zweiten Würzeleitschirm umgelenkt. Damit die Würze zu dem zweiten Würzeleitschirm gelangen kann, ist in dem ersten Würzeleitschirm eine Durchtrittsöffnung vorgesehen, über welcher der zweite Würzeleitschirm angeordnet ist der die Durchtrittsöffnung vollständig bedeckt. Die umgelenkte Würze bildet nun einen doppelten schirmartigen Fächer, wodurch sich die Ausdampffläche vergrößert. Durch die Vergrößerung der Ausdampffläche können nun mehr unerwünschte Aromastoffe ausdampfen.

Eine bevorzugte Ausführungsform der Erfindung sieht vor, daß die Weite der Durchtrittsöfffnung einstellbar ist. Damit ist der Innenkocher an unterschiedliche Anforderungen anpaßbar, je nachdem, ob die ausströmende heiße Würze viel oder wenig unerwünschte Aromastoffe enthält, bzw. ob eine große Ausdampffläche erforderlich ist oder nicht.

Zum Verändern der Weite der Durchtrittsöffnung ist zweckmäßigerweise an dem ersten Würzeleitblech ein auswechselbarer, eine Öffnung aufweisender Einsatz innerhalb der Durchtrittsöffnung befestigt.

Eine weitere Ausgestaltung der Erfindung sieht vor, daß die Durchtrittsöffnung im ersten Würzeleitschirm zentral angeordnet ist. Damit ist gewährleistet, daß ausreichend viel Würze zur Umlenkung an den zweiten Würzeleitschirm gelangt.

Eine weitere bevorzugte Ausführungsform der Erfindung besteht darin, daß der Abstand des zweiten Würzeleitschirmes von dem ersten Würzeleitschirm verstellbar ist. Durch die Verstellbarkeit kann der Umlenkgrad der Würze verändert werden, so daß wiederum unterschiedliche Ausdampfflächen je nach Anforderung erreichbar sind. Vorteilhafterweise ist hierbei der zweite Würzeleitschirm an dem ersten Würzeleitschirm über Halterungsstäbe befestigt.

Um für die umgelenkte Würze einen besonders günstigen schirmartigen Fächer zu erzielen, sieht eine weitere Ausgestaltung der Erfindung vor, daß das erste und das zweite Würzeleitblech jeweils als Schirm ausgebildet sind, welche zueinander zentriert angeordnet sind. Zweckmäßigerweise weist hierbei der zweite Würzeleitschirm einen kleineren Durchmesser auf als der erste.

Die Erfindung kann sowohl für Außenkocher als auch für Innenkocher eingesetzt werden und wird im Folgenden anhand des in der Zeichnung dargestellten Ausführungsbeispiels näher erläutert. Hierbei stellen dar:

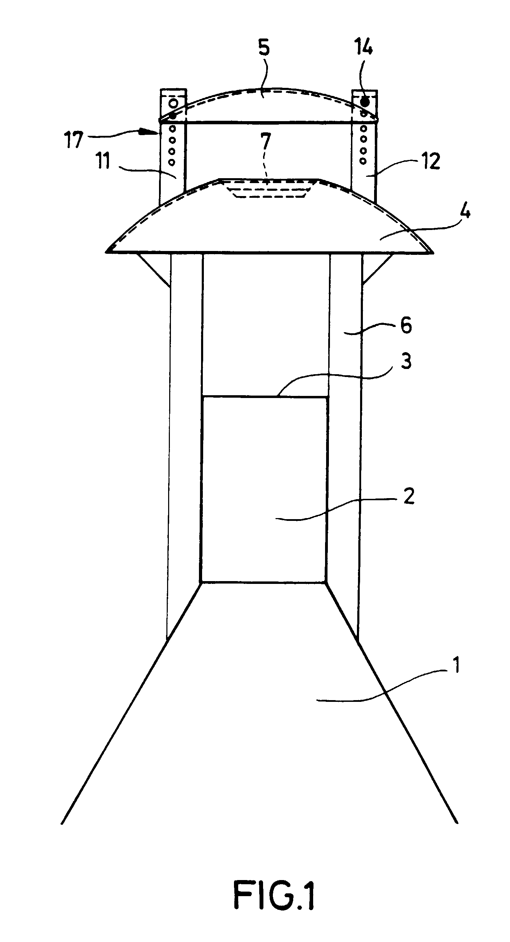

Figur 1 eine Seitenansicht des Austrittsbereichs eines erfindungsgemäßen Kochers,
Figur 2 einen abgebrochenen Querschnitt durch den ersten Würzeleitschirm
Figur 3 eine Draufsicht auf den ersten und zweiten Würzeleitschirm
Figur 4 einen Querschnitt durch einen Halterungsstab für den zweiten Würzeleitschirm

Der in bekannter Weise in einem oder außerhalb eines nicht näher dargestellten Würzekessels angeordnete Kocher 1 weist einen Austrittskanal 2 für die aufsteigende heiße Würze auf. Oberhalb einer Austrittsöffnung 3 des Austrittskanals 2 ist ein erster Würzeleitschirm 4 und wiederum darüber ein zweiter Würzeleitschirm 5 zueinander zentriert angeordnet. Der erste Würzeleitschirm 4 ist mittels Befestigungsstäben 6 mit dem eigentlichen Kocherkörper 1 verbunden und weist eine zentrale Durchtrittsöffnung 7 auf, welche von dem darüber angeordneten zweiten Würzeleitschirm 5 vollständig bedeckt wird. Der erste Würzeleitschirm 4 und der zweite Würzeleitschirm 5 sind schirmartig gewölbt ausgebildet, wobei der zweite Würzeleitschirm 5 einen kleineren Durchmesser aufweist als der erste Würzeleitschirm 4.

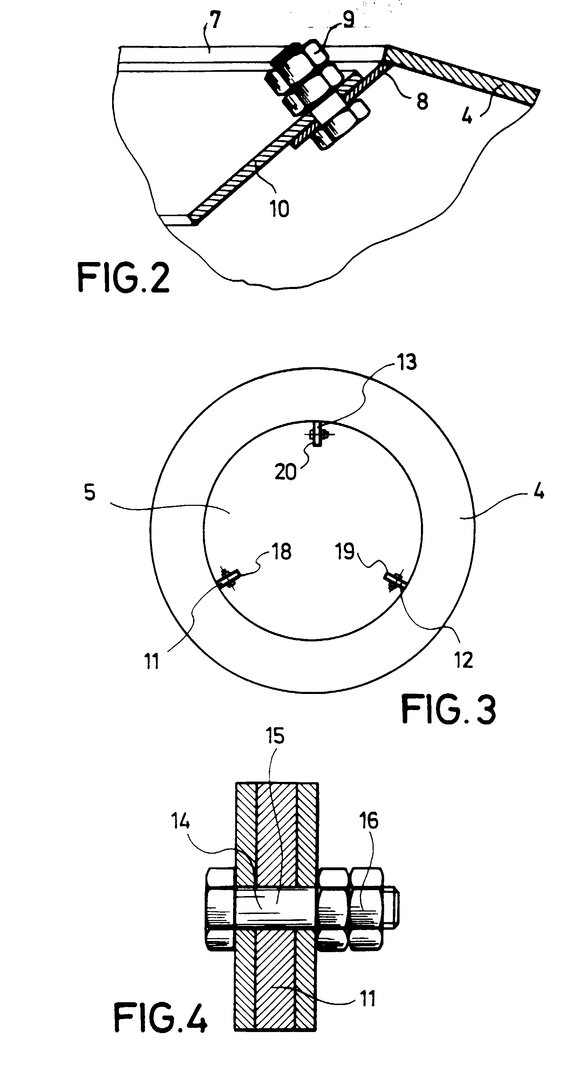

Wie in Figur 2 erkennbar, weist der erste Würzeleitschirm 4 am Rand der Durchtrittsöffnung 7 einen schräg in die Durchtrittsöffnung 7 hineinragenden umlaufenden Kragen 8 auf. An diesen Kragen 8 ist über eine Schraubverbindung 9 ein Einsatz 10 befestigt, der über die Schraubverbindung 9 auswechselbar ist. Durch diesen Einsatz 10, welcher als umlaufendes, in seiner Mitte eine Öffnung aufweisendes Blech ausgebildet ist, kann die wirksame Weite der Durchtrittsöffnung 7 verändert werden, und somit eine Anpassung an unterschiedliche Anforderungen für die gewünschten Ausdampfflächen erfolgen.

Auf dem ersten Würzeleitschirm 4 sind drei Halterungsstäbe 11, 12, 13 befestigt. Die Halterungsstäbe 11, 12, 13 weisen mehrere zentrale, in einer Reihe verlaufende Bohrungen 14 auf. In einer diese Bohrungen 14 ist eine Schraube 15 mit Mutter 16 befestigt. Diese Schraubenmutterkombination 15, 16 dient als Einstellposition 17 für den Abstand der beiden Würzeleitschirme 4, 5. Hierzu weist der zweite Würzeleitschirm noch drei Schlitze 18, 19, 20 auf, die so ausgebildet sind, daß die als Flacheisen ausgebildeten Halterungsstäbe 11, 12, 13 durch diese Schlitze 18, 19, 20 hindurch passen.

Bei dem erfindungsgemäßen Kocher wird die Ausdampffläche für die Würze dadurch vergrößert, daß ein Teil der Würze an dem ersten Würzeleitblech 4 und ein weiterer zentral aufsteigender Teil der Würze an dem zweiten Würzeleitblech 5 umgelenkt wird. Durch die vergrößerte Oberfläche von zwei Würzeleitblechen bzw. -schirmen ist somit auch die Ausdampffläche für die Würze vergrößert. Eine Anpassung an unterschiedliche Anforderungen kann dadurch erfolgen, daß einerseits die Durchtrittsöffnung 7 über den Einsatz 10 verstellt wird und andererseits der Abstand der beiden Würzeleitschirme 4, 5 zueinander verstellt wird. Soll der Abstand verstellt werden, so wird der zweite Würzeleitschirm 5 von den Halterungsstangen 11, 12, 13 weggezogen, anschließend wird die Schraubenmutterkombination 15, 16 gelöst und in einer anderen Bohrung 14 angeordnet, wobei diese Veränderung der Schraubenmutterkombination 15, 16 bei jedem der Halterungsstäbe 11, 12, 13 auf gleicher Höhe erfolgt. Anschließend wird der zweite Würzeleitschirm 5 wieder auf die Halterungsstäbe 11, 12, 13 aufgesteckt und abgesenkt, bis es auf der Schraubenmutterkombination 15, 16 aufliegt.

## Patentansprüche

1. Kocher für einen Würzekessel mit einem ersten Würzeleitschirm (4) am Austritt der Würze, **dadurch gekennzeichnet,** daß ein zweiter Würzeleitschirm (5) oberhalb des ersten Würzeleitschirms (4) angeordnet ist und der erste Würzeleitschirm (4) eine Durchtrittsöffnung (7) für die Würze aufweist, welche von den darüber angeordneten zweiten Würzeleitschirm (5) vollständig bedeckt wird.

2. Kocher nach Anspruch 1 **dadurch gekennzeichnet,** daß die Weite der Durchtrittsöffnung 7 einstellbar ist.

3. Kocher nach Anspruch 2, **dadurch gekennzeichnet,** daß an dem ersten Würzeleitschirm (4) ein auswechselbarer, eine Öffnung aufweisender Einsatz (10) innerhalb der Durchtrittsöffnung (7) befestigt ist.

4. Kocher nach Anspruch 3, **dadurch gekennzeichnet,** daß der erste Würzeleitschirm (4) einen in die Durchtrittsöffnung (7) hineinragenden Kragen aufweist, an welchem der Einsatz (10) befestigt ist.

5. Kocher nach wenigstens einem der vorhergehenden Ansprüche, **dadurch gekennzeichnet,** daß die Eintrittsöffnung (7) in dem ersten Würzeleitschirm (4) zentral angeordnet ist.

6. Kocher nach wenigstens einem der vorhergehenden Ansprüche, **dadurch gekennzeichnet,** daß der Abstand zwischen dem ersten Würzeleitschirm (4) und dem zweiten Würzeleitschirm 5) verstellbar ist.

7. Kocher nach Anspruch 6, **dadurch gekennzeichnet,** daß der zweite Würzeleitschirm (5) an dem ersten Würzeleitschirm (4) verstellbar angeordnet ist.

8. Kocher nach Anspruch 7, **dadurch gekennzeichnet,** daß an der Oberseite des ersten Würzeleitschirms (4) Halterungsstäbe (11, 12, 13) angeordnet sind und der zweite Würzeleitschirm (5) Schlitze (18, 19, 20) zur Aufnahme der Halterungsstäbe (11, 12, 13) aufweist.

9. Kocher nach Anspruch 8, **dadurch gekennzeichnet,** daß die Halterungsstäbe (11, 12, 13) verschiedene Einstellpositionen (14) für den Abstand der beiden Würzeleitschirme (4, 5) aufweisen.

10. Kocher nach Anspruch 9, **dadurch gekennzeichnet,** daß jede Einstellposition (14) als eine mit einer Mutter/Schraubenkombination (15, 16) versehene Bohrung (14) ausgebildet ist, auf welcher der zweite Würzeleitschirm (5) aufliegt.

11. Kocher nach wenigstens einem der vorhergehenden Ansprüche 8 bis 10, **dadurch gekennzeichnet,** daß drei Halterungsstäbe (11, 12, 13) vorgesehen sind.

12. Kocher nach wenigstens einem der vorhergehenden Ansprüche 8 bis 11, **dadurch gekennzeichnet,** daß jeder Halterungsstab (11, 12, 13) als Flacheisen ausgebildet ist.

13. Kocher nach wenigstens einem der vorhergehenden Ansprüche, **dadurch gekennzeichnet,** daß der zweite Würzeleitschirm (5) einen kleineren Durchmesser aufweist als der erste Würzeleitschirm (4).

14. Kocher nach wenigstens einem der vorhergehenden Ansprüche, **dadurch gekennzeichnet,** daß der erste Würzeleitschirm (4) und der zweite Würzeleitschirm (5) jeweils schirmartig gewölbt ausgebildet sind, und zueinander zentriert angeordnet sind.

## Claims

1. Heater for a wort kettle, having a first wort-directing screen (4) at the wort outlet, characterized in that a second wort-directing screen (5) is arranged above the first wort-directing screen (4), and the first wort-directing screen (4) has a through-passage opening (7) which is intended for the wort and is completely covered by the second wort-directing screen (5), which is arranged thereabove.

2. Heater according to Claim 1, characterized in that the width of the through-passage opening (7) can be adjusted.

3. Heater according to Claim 2, characterized in that an exchangeable insert (10) which has an opening is fastened on the first wort-directing screen (4), within the through-passage opening (7).

4. Heater according to Claim 3, characterized in that the first wort-directing screen (4) has a collar which projects into the through-passage opening (7) and on which the insert (10) is fastened.

5. Heater according to at least one of the preceding claims, characterized in that the through-passage opening (7) is arranged centrally in the first wort-directing screen (4).

6. Heater according to at least one of the preceding claims, characterized in that the distance between the first wort-directing screen (4) and the second wort-directing screen (5) can be adjusted.

7. Heater according to Claim 6, characterized in that the second wort-directing screen (5) is arranged adjustably on the first wort-directing screen (4).

8. Heater according to Claim 7, characterized in that securing bars (11, 12, 13) are arranged on the top side of the first wort-directing screen (4), and the second wort-directing screen (5) has slits (18, 19, 20) for receiving the securing bars (11, 12, 13).

9. Heater according to Claim 8, characterized in that the securing bars (11, 12, 13) have different adjustment positions (14) for the distance between the two wort-directing screens (4, 5).

10. Heater according to Claim 9, characterized in that each adjustment position (14) is designed as a bore (14) which is provided with a nut/screw combination (15, 16) and on which the second wort-directing screen (5) rests.

11. Heater according to at least one of the preceding Claims 8 to 10, characterized in that three securing bars (11, 12, 13) are provided.

12. Heater according to at least one of the preceding Claims 8 to 11, characterized in that each securing bar (11, 12, 13) is designed as a flat steel bar.

13. Heater according to at least one of the preceding claims, characterized in that the second wort-directing screen (5) has a smaller diameter than the first wort-directing screen (4).

14. Heater according to at least one of the preceding claims, characterized in that the first wort-directing screen (4) and the second wort-directing screen (5) are each designed to be curved in an umbrella-like manner and are arranged to be centred with respect to one another.

## Revendications

1. Chaudière pour une cuve destinée à du moût de bière, comprenant un premier parapluie (4) pour le guidage du moût à la sortie du moût, caractérisée en ce qu'un second parapluie (5) pour le guidage du moût est disposé au-dessus du premier parapluie (4) pour le guidage du moût et le premier parapluie (4) pour le guidage du moût présente une ouverture de passage (7) pour le moût qui est complètement recouverte par le second parapluie (5) pour le guidage du moût disposé par-dessus.

2. Chaudière selon la revendication 1, caractérisée en ce que la largeur de l'ouverture de passage (7) est réglable.

3. Chaudière selon la revendication 2, caractérisée en ce qu'une pièce rapportée échangeable (10) présentant une ouverture est fixée au premier parapluie (4) pour le guidage du moût, à l'intérieur de l'ouverture de passage (7).

4. Chaudière selon la revendication 3, caractérisée en ce que le premier parapluie (4) pour le guidage du moût présente un rebord faisant saillie à l'intérieur de l'ouverture de passage (7), auquel est fixée la pièce rapportée (10).

5. Chaudière selon au moins une des revendications ci-dessus, caractérisée en ce que l'ouverture d'entrée (7) est située en position centrale dans le premier parapluie (4) pour le guidage du moût.

6. Chaudière selon au moins une des revendications ci-dessus, caractérisée en ce que l'écartement entre le premier parapluie (4) pour le guidage du moût et le second parapluie (5) pour le guidage du moût est réglable.

7. Chaudière selon la revendication 6, caractérisée en ce que le second parapluie (5) pour le guidage du moût est disposé de manière réglable sur le premier parapluie (4) pour le guidage du moût.

8. Chaudière selon la revendication 7, caractérisée en ce que des barres de fixation (11, 12, 13) sont disposées sur le côté supérieur du premier parapluie (4) pour le guidage du moût et le second parapluie (5) pour le guidage du moût présente des fentes (18, 19, 20) pour que viennent s'y loger les barres de fixation (11, 12, 13).

9. Chaudière selon la revendication 8, caractérisée en ce que les barres de fixation (11, 12, 13) présentent différentes positions de réglage (14) pour l'écartement entre les deux parapluies (4, 5) pour le guidage du moût.

10. Chaudière selon la revendication 9, caractérisée en ce que chaque position de réglage (14) est réalisée sous forme d'un alésage (14) muni d'une combinaison d'écrou/vis (15, 16), sur lequel vient s'appuyer le second parapluie (5) pour le guidage du moût.

11. Chaudière selon au moins une des revendications 8 à 10 ci-dessus, en ce qu'on prévoit trois barres de fixation (11, 12, 13).

12. Chaudière selon au moins une des revendications 8 à 11 ci-dessus, caractérisée en ce que chaque barre de fixation (11, 12, 13) est réalisée sous forme d'un fer plat.

13. Chaudière selon au moins une des revendications ci-dessus, caractérisé en ce que le second parapluie (5) pour le guidage du moût présente un diamètre inférieur à celui du premier parapluie (4) pour le guidage du moût.

14. Chaudière selon au moins une des revendications ci-dessus, caractérisée en ce que le premier parapluie (4) pour le guidage du moût et le second parapluie (5) pour le guidage du moût sont respectivement de configuration bombée et sont disposés en étant centrés l'un par rapport à l'autre.
